# EUROPEAN PATENT SPECIFICATION

(11) **EP 1 481 186 B1**
(45) Date of publication and mention of the grant of the patent: **24.01.2007**
(21) Application number: 02787563.2
(22) Date of filing: 05.11.2002
(51) Int. Cl.: F16L 37/00

(54) **QUICK-COUPLING COCK AND COUPLING TUBE INTERACTING WITH SAID COCK**
SCHNELLANSCHLUSSHAHN UND AN DIESEN HAHN ANZUSSCHLIESSENDES ROHR
ROBINET A RACCORDEMENT RAPIDE ET TUBE DE RACCORDEMENT INTERAGISSANT AVEC LEDIT ROBINET

(30) Priority: 01.03.2002 IT VI20020037
(43) Date of publication of application: 01.12.2004
(73) Proprietor: GAV Srl, 36040 Brendola (VI) (IT)
(72) Inventor: GHIOTTO, Angelo, I-36040 Brendola (IT); GHIOTTO, Sergio, I-36040 Brendola (IT); GHIOTTO, Franco, I-36040 Brendola (IT)
(74) Representative: Bonini, Ercole
(86) International application number: PCT/EP2002/012322
(87) International publication number: WO 2003/074920

(56) References cited:
- FR-A- 2 527 741
- US-A- 5 290 009

## Description

The present invention relates to a quick-coupling cock adapted to interact with a coupling tube to connect a compressed air distribution network to a user.

It is well known that to carry out the quick connection of compressed air users such as machine tool actuators, portable tools, spraying guns and the like to a distribution network, proper quick-coupling cocks are used, connected to the distribution network, receiving insertion of a coupling tube generally arranged at the end of a flexible hose feeding the user.

The quick connection and release of the coupling tube relative to the cock, are allowed by the particular configuration of sliding means and joining means contained in the cock and by shapings made in the coupling tube to be coupled to said joining means.

A quick coupling cock of this type is disclosed in US 5,290,009.

The above mentioned quick coupling cocks of the prior art have however some drawbacks.

A first drawback consists in that to insert the coupling tube into the cock, it is necessary to apply to the tube a considerable force to overcome the thrust exerted by compressed air pressure and elasticity of the elastic means arranged in the cock.

Another drawback consists in that during the phase of releasing the coupling tube from the cock, a transient state occurs in which air accumulated inside the cock and the user feeding hose, is suddenly discharged to the outside, generating a violent thrust on the coupling tube that may accidentally slip out from the operator's grip and jeopardize the release operation safety.

The present invention aims at overcoming said drawbacks.

More particularly a first object of the invention is to provide a quick-coupling cock allowing insertion of the relevant coupling tube by applying to it a considerably lower force relative to that required with cocks of the prior art.

Another object of the invention is to avoid that during release of the coupling tube from the cock there, is no contemporaneous discharge to the atmosphere of the residual air contained in the cock and in the user connection hose.

The foregoing objects are attained by a quick-coupling cock adapted to interact with a coupling tube to connect a compressed air distribution network to a user, that according to the main claim comprises:
- a cock body in which there are an inlet chamber communicating with said distribution network and an outlet chamber in which a tubular body projecting from said outlet chamber is coupled and slidingly receiving said coupling tube communicating with said user;
- elastic means coaxially arranged inside said tubular body between the bottom of said outlet chamber and a spring pusher coaxially coupled inside said tubular body;
- stopping means adapted to constrain said coupling tube in said tubular body;
- a sliding sleeve externally coupled to said cock body and to the end of said tubular body projecting from said outlet chamber;
- first stop means provided in said cock body;
- second stop means provided at said end of said tubular body;
and is characterized in that said sliding sleeve comprises a tubular ring nut coupled to said cock body and a tubular lock ring coaxially aligned with said ring nut and coupled to said projecting end of said tubular body, said tubular ring nut and said lock ring being coaxially coupled one inside the other for at least a common stretch where there is at least a discharge way of said cock. Between said tubular ring nut and said cock body there are:
- a first peripheral chamber putting in communication a first opening of said inlet chamber with a second opening of said outlet chamber when said ring nut is separated from said first stop means and said lock ring is abutting on said second stop means;
- a second peripheral chamber communicating with said outlet chamber through said second opening and with the outside through at least a discharge way of said sleeve when said ring nut is abutting on said first stop means and said lock ring is abutting on said second stop means.

According to a preferred embodiment the sliding sleeve comprises a tubular ring nut slidingly coupled outside the cock body and a tubular lock ring coaxially aligned with said ring nut and slidingly coupled outside the projecting portion of said tubular body.

Connection and disconnection of the coupling tube relative to the cock occurs through a separate sliding movement of the ring nut and the lock ring allowing connection and disconnection of the coupling tube without presence of compressed air in the cock.

Advantageously the cock of the invention results in an easier use both in the connection and disconnection phase of the coupling tube in comparison with the cocks of the prior art.

Also advantageously the greater simplicity of use of said cock during the connection and disconnection phase, involves also conditions of greater safety of use for the operator.

The foregoing objects and advantages will be better understood by reading the description of a preferred embodiment of the invention which is given as an illustrative but not limiting example with reference to the accompanying sheets of drawings in which:
- Fig. 1 is a longitudinal sectional view of the quick-coupling cock and coupling tube intended to interact with the cock, both being subject of the invention; and
- Figs. 2 to 4 show the cock and the coupling tube of fig. 1 in three different operative phases.

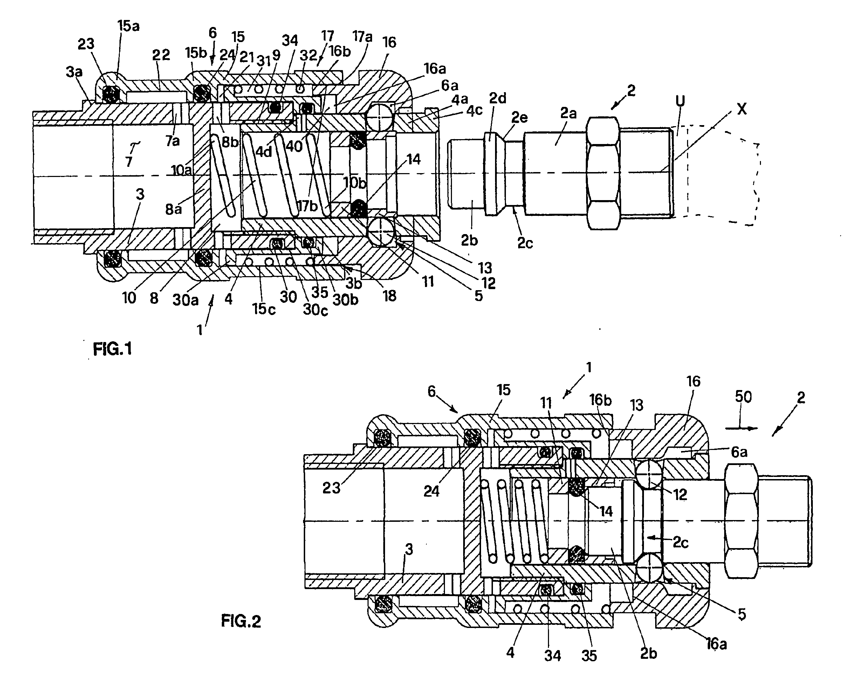

The quick-coupling cock and the corresponding coupling tube intended to interact with the cock, both being subject of the invention, are shown in figs. 1 to 4 where they are indicated generally with 1 and 2 respectively.

More particularly one can see that the cock 1 comprises a cock body 3 with circular section, outside which there is a sliding sleeve 6 and inside which a tubular body 4 is coupled, provided with the stopping means 5 adapted to constrain the coupling tube 2 that has a circular section as well.

With particular regard to the cock body 3, one can see that an inlet chamber 7 communicating with the compressed air distribution network D and an outlet chamber 8 to which the tubular body 4 is coupled through a thread 9, are defined in it.

Such a tubular body 4 has the end 4a projecting from the outlet chamber 8 and slidingly receiving the coupling tube 2 feeding a user U during insertion in the outlet chamber 8.

Inside the tubular body 4 there are elastic means consisting of a helical spring 10 having a first end 10a abutting against the bottom 8a of the outlet chamber 8 and the opposite end 10b in contact with a spring pusher 11. As to the stopping means generally indicated with 5 one can see that they comprise a plurality of balls 12 arranged in through holes 4b radially made in the projecting end 4a of the tubular body 4, said balls being comprised between a sit 6a made in the sliding sleeve 6 and a tube guide 13 coaxially aligned with the spring pusher 11.

More particularly between the spring pusher 11 and the tube guide 13 there is a seal 14 radially projecting to the inside of the tubular body 4.

According to the invention, said sliding sleeve 6 comprises a tubular ring nut 15 coupled to said cock body 3 and a tubular lock ring 16 coaxially aligned with said ring nut 15 and coupled to said projecting end 4a of said tubular body 4, said tubular ring nut 15 and said tubular lock ring 16 being coaxially coupled one inside the other for at least a common stretch 17 in which there is at least a discharge way 18 of said cock 1.

Between said tubular ring nut 15 and said cock body 3 there are:
- a first peripheral chamber 20 putting in communication a first opening 7a of said inlet chamber 7 with a second opening 8b of said outlet chamber 8 when said ring nut 15 is separated from said first stop means 3a and said lock ring 16 is abutting on said second stop means 4b;
- a second peripheral chamber 21 communicating with said outlet chamber 8 through said second opening 8b and with the outside through at least a discharge way 18 provided in said sleeve 6 when said ring nut 15 is abutting on said first stop means 3a and said lock ring 16 is abutting on said second stop means 4b.

In the lock ring 16 there is the sit 6a receiving the balls 12 constituting the mentioned stopping means 5.

The ring nut 15 and the lock ring 16 coaxially coupled to each other for an annular stretch generally indicated with 17 through the opposite surfaces 17a, 17b, carry out an axially sliding coupling without interference substantially without radial play.

In the cock there are also first stop means 3a provided in the cock body 3 and second stop means 4b provided in the projecting end 4a and tubular body 4 cooperating in contact with the sliding sleeve 6.

The discharge way 18 consists of the annular passage generated in the annular stretch 17 between the opposite surfaces 17a, 17b of the ring nut 15 and lock ring 16 respectively.

The inlet chamber 7, which is always in communication with the compressed air distribution network, as shown in fig. 1, is therefore put in communication with the outlet chamber 8 by the axial movement of the ring nut 15 along the direction defined by the longitudinal axis X of the cock.

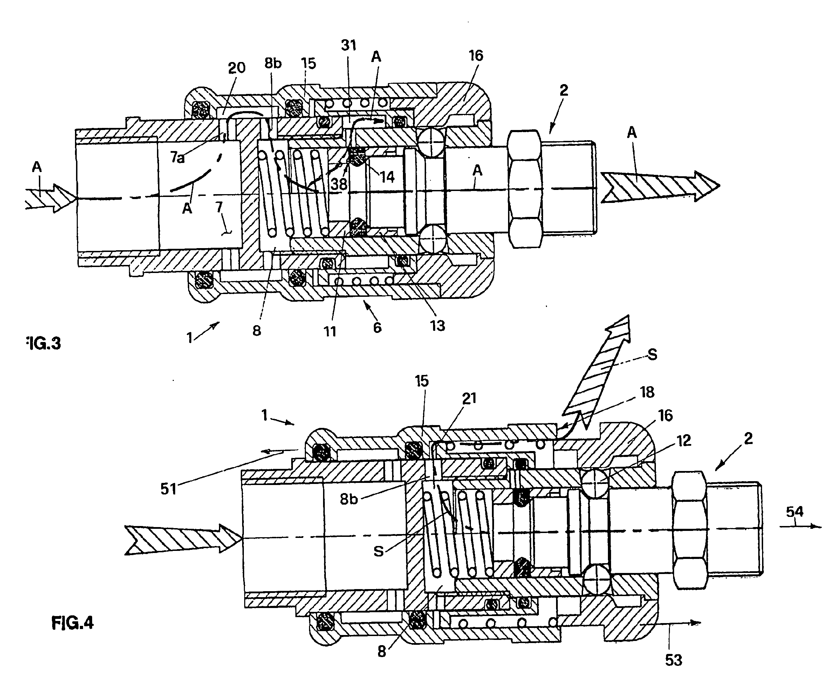

The outlet chamber 8 as shown in fig. 4, is put in communication with the outside through the discharge way 18.

As shown in fig. 1 the first peripheral chamber 20 is carried out through an annular recess 22 which is made in the ring nut 15 and is comprised between a first annular protrusion 15a and a second annular protrusion 15b, both made in the ring nut 15. In each annular protrusion there is a sealing means consisting of an O-Ring 23, 24 respectively, externally cooperating with the cock body 3.

As to the second peripheral chamber 21 it is bounded in the axial direction between said second annular protrusion 1.5b of the ring nut 15 and a first annular edge 30a of a shaped ring 30 slidingly coupled outside the cock body 3 and under the ring nut 15.

A second annular edge 30b arranged on the opposite side relative to the first annular edge 30a and facing the shoulder 16b of the lock ring 16, defines completely the shaped ring. 30 that takes in this way a generally S-like shape. One can also see that between the outer surface 30c of the shaped ring 30 and the inner surface 15c of the ring nut 15 there is a first annular chamber 31 with a variable volume receiving a helical spring 32. This chamber is comprised between the first annular edge 30a of the shaped ring 30 and the end 16b of the lock ring 16 thus making elastic the movement of the shaped ring 30 along the direction defined by the longitudinal axis X of the cock. Moreover a second annular chamber with varying volume indicated with 40 in which there is the second annular edge 30b of the shaped ring 30, is bound between the end 3b of the cock body 3 and the shoulder 16a of the lock ring 16.

The second annular chamber 40 having a variable volume according to the mutual position of the lock ring 16 and the shaped ring 30, may be put in communication with the outlet chamber 8 by means of one or more through holes 4d radially made in the tubular body 4.

The presence of the O-Rings 34 at the end 3b of the cock body 3 and 35 in the second annular edge 30b of the shaped ring 30, respectively, warrant the tightness during the movements.

As to the coupling tube generally indicated with 2, one can see that it comprises a cylindrical body 2a with an end 2b which is received in the tube guide 13 and is in contact with the seal 14, and an annular recess 2c receiving the balls 12 and separated from the end 2b by an annular protrusion 2d.

In the annular protrusion 2d there is an inclined annular surface 2e assisting the balls 12 to come out from the annular recess 2c when the coupling tube 2 is disengaged from the cock 1.

When the cock 1 is not coupled to the coupling tube 2, it is in the rest condition shown in fig. 1 in which compressed air coming from the distribution network is restricted inside the inlet chamber 7 and the first peripheral chamber 20 with which it communicates through the first opening 7a.

The presence of the O-Rings 23, 24 prevents leakage of air to the surrounding environment.

In this situation there is obviously no air feed to the user.

When the operator inserts the coupling tube 2 in the cock 1 applying thereto the force indicated by arrow 50 as shown in fig. 2, the shaped end 2b of the coupling tube 2 is inserted in the tube guide 13 and forces axially the spring pusher 11 that moves axially to the cock inside compressing the spring 10.

Movement of the tube guide 13 allows the balls 12 to be radially lowered, entering the annular recess 2c of the coupling tube 2.

In this condition the operator causes the lock ring 16 to retract in the direction indicated by arrow 50 and constrains the balls 12 inside the annular recess 2c of the coupling tube 2 preventing its disengagement.

Therefore one arrives at the configuration shown in fig. 2 in which the compressed air of the distribution network is still restricted inside the inlet chamber 7 and the first peripheral chamber 20 although the coupling tube 2 is mechanically connected to the cock 1.

Indeed it is to be noted that contrary to what happens in the known cocks of the prior art, insertion of the coupling tube 2 in the cock 1 occurs when the operator exerts only the axial force of compressing the spring 10, therefore without being obliged to overcome also the counteracting thrust of the compressed air.

Starting from this condition, the operator causes the ring nut 15 to slide along the same direction indicated by arrow 50 until it is placed close to the lock ring 16 as shown in fig. 3.

In this condition the first peripheral chamber 20 through the first opening 7a and the second opening 8b puts in communication the inlet chamber 7 with the outlet chamber 8 allowing the flow A of compressed air from the distribution network to the user through the coupling tube 2 as shown in fig. 3.

The movement of the lock ring 16 moves also the shaped ring 30 in the direction of the arrow 50 thus modifying the volume of the second annular chamber 40 taking the configuration of fig. 3.

In this condition in the gap 38 defined between the spring pusher 11 and the seal 14 interposed between the spring pusher 11 and the tube guide 13, passage of compressed air occurs from the outlet chamber 8 to the second annular chamber 40 through the hole 4d made in the tubular body 4.

As shown in fig. 3, air entering the first annular chamber 31 acts against the second annular edge 30b of the shaped ring 30 keeping it close to the shoulder 16a of the lock ring 16.

In this way pressure existing inside the first annular chamber 31, being the same pressure existing in the outlet chamber 8 and in the hose that from the coupling tube 2 feeds the user U, keeps the lock ring 16 blocked in the reached position.

During passage of compressed air the balls 12 firmly constrained inside the annular recess 2c of the coupling tube 2, prevent the mechanical separation of the tube from the cock.

In order to disconnect the coupling tube 2 from the cock 1 it is sufficient with reference to fig. 4, that the operator moves the ring nut 15 in the direction of arrow 51 opposite to the direction of the arrow 50 hereinbefore described, placing the ring nut 15 close to the first stop means 3a of the cock body 3. One can see that the stop means consist of a ring 3a projecting from the cock body 3.

In this condition as shown in fig. 4, the outlet chamber 8 is put in communication with the second peripheral chamber 21 through the second opening 8b. From the peripheral chamber 21 the compressed air leaks into the first annular chamber 31 from which, through the discharge way 18 made in the common stretch 17 coupling ring nut 15 and lock ring 16, it flows to the outside along the direction indicated by S. All the air present in the outlet chamber 8 and in the hose connected to the user U is therefore discharged to the external environment.

The coupling tube 2 however cannot be still disconnected mechanically from the cock 1 because it is still constrained by the balls 12.

In order to disconnect the coupling tube 2, the operator moves the lock ring 16 in the direction indicated by arrow 53 in fig. 4 thus restoring for the cock 1 the condition shown in fig. 2 in which the balls 12 can return into the sit 6a made in the lock ring 16. Then applying the force 54 to the coupling tube 2, the thrust of the inclined plane 2e made in the annular protrusion 2d causes the balls 12 to return into the sit 6a of the lock ring 16 where they are kept positioned by the elastic return of the tube guide 13. At this moment it is possible to disconnect the coupling tube 2 from the cock 1.

It is to be noted that the phase of disconnection of the coupling tube 2 occurs without air present in the outlet chamber 8. In this way the likelihood is avoided that during disconnection the residual air existing in the cock and in the hose to the user U, is suddenly discharged to the outside causing damages as it happens with cocks of the prior art in case that the tube slips out of the operators grip during the disconnection phase.

## Claims

1. A quick coupling cock (1) intended to interact with a coupling tube (2) to connect a compressed air distribution network (D) to a user (U), comprising:
- a cock body (3) in which there are an inlet chamber (7) communicating with said distribution network (D) and an outlet chamber (8) to which a tubular body (4) is coupled, protruding from said outlet chamber (8) and slidingly receiving said coupling tube (2) communicating with said user (U);
- elastic means (10) coaxially arranged inside said tubular body (4) bounded between the bottom (8a) of said outlet chamber (8) and a spring pusher (11) coaxially coupled inside said tubular body (4);
- stopping means (5) adapted to constrain said coupling tube (2) to said tubular body (4);
- a sliding sleeve (6) externally coupled to said cock body (3) and to the end (4a) of said tubular body (4) protruding from said outlet chamber (8);
- first stop means (3a) provided in said cock body (3);
- second stop means (4b) provided at said end (4a) of said tubular body (4), **characterized in that** said sliding sleeve (6) comprises a tubular ring nut (15) coupled to said cock body (3) and a tubular lock ring (16) coaxially aligned with said ring nut (15) and coupled to said protruding end (4a) of said tubular body (4), said tubular ring nut (15) and said lock ring (16) being coaxially coupled one inside the other for at least a common stretch (17) where there is at least a discharge way (18) of said cock (1).

2. The cock (1) according to claim 1 **characterized in that** between said tubular ring nut (15) and said cock body (3) there are:
- a first peripheral chamber (20) putting in communication a first opening (7a) of said inlet chamber (7) with a second opening (8b) of said outlet chamber (8) when said ring nut (15) is separated from said first stop means (3a) and said lock ring (16) is arranged abutting on said second stop means (4b);
- a second peripheral chamber (21) communicating with said outlet chamber (8) through said second opening (8b) and with the outside environment through said at least a discharge way (18) provided in said sleeve (6), when said ring nut (15) is arranged abutting on said first stop means (3a) and said lock ring (16) is arranged abutting on said second stop means (4b).

3. The cock (1) according to claim 1) **characterized in that** said at least a discharge way (18) is a duct defined by the coupling tolerance between the dimensions of the opposing surfaces (17a, 17b) of said common stretch (17).

4. The cock (1) according -to claim 2) **characterized in that** said second peripheral chamber (21) is bounded by said tubular ring nut (15), said cock body (3) and the first annular edge (30a) of a shaped ring (30) radially arranged between said ring nut (15) and said cock body (3).

5. The cock (1) according to claim 4) **characterized in that** said shaped ring (30) comprises a second annular edge (30b) which is arranged at the opposite side relative said first edge (30a) and is axially arranged between the end (3b) of said cock body (3) and said lock ring (16).

6. The cock (1) according to claim 4) **characterized in that** between the outer surface (30c) of said shaped ring (30) and the inner surface (15c) of said ring nut (15) there is a first annular chamber (31) receiving elastic means (32) arranged between said first annular edge (30a) of said shaped ring (30) and said lock ring (16).

7. The cock (1) according to claim 5) **characterized in that** between said end (3b) of said cock body (3), said lock ring (16) and said tubular body (4) there is a second annular chamber (40) in which there is said second annular edge (30b) of said shaped ring (30).

8. The cock (1) according to claim 7) **characterized in that** said tubular body (4) has a through hole (4c) putting said second annular chamber (40) in communication with said outlet chamber (8).

9. The cock (1) according to claim 1) **characterized by** comprising elastic means consisting of a helical spring (10) arranged inside said outlet chamber (8) of said cock body (3) and having a first end (10a) arranged in contact with the bottom (8a) of said outlet chamber (8) and a second end arranged in contact with said spring pusher (11).

10. The cock (1) according to claim 1) **characterized in that** said stopping means (5) comprise a plurality of balls (12) arranged in corresponding through holes (4b) radially made in said protruding end (4a) of said tubular body (4) and arranged between corresponding seats (6a) made in said lock ring (16) and the surface of a tube guide (13) coaxially aligned with said spring pusher (11).

11. The cock (1) according to claim 10) **characterized in that** a seal (14) protruding to the inside of said tubular body (4) is arranged between said spring pusher (11) and tube guide (13).

12. The cock (1) according to claim 2) **characterized in that** said first peripheral chamber (20) is defined by an annular recess (22) made in said ring nut (15) and arranged between a first annular protrusion (15a) and a second annular protrusion (15b) of said ring nut (15), each of them receiving a sealing means (23, 24) cooperating with said cock body (3).

13. The cock (1) according to claim 7) **characterized in that** said shaped ring (30) cooperates with said cock body (3) and with said tubular body . (4) by interposition of sealing means (34, 35).

14. A coupling tube (2) intended to interact with the cock (1) according to claim 1) **characterized by** comprising a cylindrical body (2a) provided with an end (2b) and an annular recess (2c) adapted to receive said stopping means (5).

15. The coupling tube (2) according to claim 14) **characterized by** comprising an annular protrusion (2d) arranged between said end (2b) and said annular recess (2c).

16. The coupling tube (2) according to claim 15) **characterized in that** said annular protrusion (2d) has an inclined annular surface (2e).

## Patentansprüche

1. Ein Schnellkupplungshahn (1), darauf ausgelegt, mit einem Verbindungsrohr (2) zusammenzuwirken, um ein Druckluftverteilungsnetz (D) an einen Verbraucher (U) anzuschließen, Folgendes umfassend:
- einen Hahnkörper (3), in dem sich eine Einlasskammer (7) befindet, die mit dem Verteilungsnetz (D) kommuniziert, sowie eine Auslasskammer (8), an die ein röhrenförmiger Körper (4) angekuppelt ist, der aus der Auslasskammer (8) herausragt und gleitend das Verbindungsrohr (2) aufnimmt, das mit dem Verbraucher (U) kommuniziert;
- elastische Mittel (10), die koaxial innerhalb des röhrenförmigen Körpers (4) angeordnet sind, eingegrenzt zwischen dem Boden (8a) der Auslasskammer (8) und einem koaxial im röhrenförmigen Körper (4) angekuppelten Federschieber (11);
- Sperrmittel (5), dazu geeignet, das Verbindungsrohr (2) am röhrenförmigen Körper (4) zu befestigen;
- eine extern am Hahnkörper (3) und am Ende (4a) des röhrenförmigen, aus der Auslasskammer (8) herausragenden Körpers (4) befestigte Gleitmuffe (6);
- erste Anschlagmittel (3a) im Hahnkörper (3);
- zweite Anschlagmittel (4b) am Ende (4a) des röhrenförmigen Körpers (4), **dadurch gekennzeichnet, dass** die Gleitmuffe (6) eine röhrenförmige Ringmutter (15) umfasst, die am Hahnkörper (3) befestigt ist, sowie einen röhrenförmigen Verschlussring (16), der koaxial auf die Ringmutter (15) ausgerichtet ist und mit dem herausragenden Ende (4a) des röhrenförmigen Körpers (4) gekuppelt ist, wobei die röhrenförmige Ringmutter (15) und der Verschlussring (16) über wenigstens eine gemeinsame Strecke (17), an der sich wenigstens ein Abflussweg (18) des Hahns (1) befindet, koaxial ineinander gepasst sind.

2. Der Hahn (1) gemäß Patentanspruch 1), **dadurch gekennzeichnet, dass** sich zwischen der röhrenförmigen Ringmutter (15) und den Hahnkörper (3) Folgendes befindet:
- eine erste Umfangskammer(20), die eine erste Öffnung (7a) der Einlasskammer (7) mit einer zweiten Öffnung (8b) der Auslasskammer (8) in Kommunikation versetzt, wenn die Ringmutter (15) von den ersten Anschlagmitteln (3a) getrennt ist und der Verschlussring (16) vorkragend auf den zweiten Anschlagmitteln (4b) positioniert ist;
- eine zweite Umfangskammer (21), die mit der Auslasskammer (8) über die zweite Öffnung (8b) kommuniziert sowie mit der externen Umgebung über den wenigstens einen Abflussweg (18) in der Muffe (6), wenn die Ringmutter (15) vorkragend auf den ersten Anschlagmitteln (3a) positioniert ist und der Verschlussring (16) vorkragend auf den zweiten Anschlagmitteln (4b) positioniert ist.

3. Der Hahn (1) gemäß Patentanspruch 1), **dadurch gekennzeichnet, dass** wenigstens ein Abflussweg (18) eine Leitung ist, die durch die Kupplungstoleranz zwischen den Abmessungen der einander gegenüberliegenden Flächen (17a, 17b) der gemeinsamen Strecke (17) definiert ist.

4. Der Hahn (1) gemäß Patentanspruch 2), **dadurch gekennzeichnet, dass** die zweite Umfangskammer (21) durch die röhrenförmige Ringmutter (15) begrenzt ist, wobei der Hahnkörper (3) und die erste, ringförmige Kante (30a) eines geformten Rings (30) radial zwischen der Ringmutter (15) und dem Hahnkörper (3) angeordnet sind.

5. Der Hahn (1) gemäß Patentanspruch 4), **dadurch gekennzeichnet, dass** der geformte Ring (30) eine zweite, ringförmige Kante (30b) aufweist, die an den bezüglich der ersten Kante (30a) entgegengesetzt ist und axial zwischen dem Ende (3b) des Hahnkörpers (3) und dem Verschlussring (16) angeordnet ist.

6. Der Hahn (1) gemäß Patentanspruch 4), **dadurch gekennzeichnet, dass** zwischen der Außenfläche (30c) des geformten Rings (30) und der Innenfläche (15c) der Ringmutter (15) eine erste, ringförmige Kammer (31) vorhanden ist, die elastische Mittel (32) aufnimmt, welche zwischen der ersten ringförmigen Kante (30a) des geformten Rings (30) und dem Verschlussring (16) positioniert sind.

7. Der Hahn (1) gemäß Patentanspruch 5), **dadurch gekennzeichnet, dass** zwischen dem Ende (3b) des Hahnkörpers (3), dem Verschlussring (16) und dem röhrenförmigen Körper (4) eine zweite ringförmige Kammer (40) befindlich ist, in der sich die zweite ringförmige Kante (30b) des geformten Rings (30) befindet.

8. Der Hahn (1) gemäß Patentanspruch 7), **dadurch gekennzeichnet, dass** der röhrenförmige Körper (4) ein Durchgangsloch (4c) aufweist, das die zweite ringförmige Kammer (40) mit der Auslasskammer (8) in Kommunikation setzt.

9. Der Hahn (1) gemäß Patentanspruch 1), **dadurch gekennzeichnet, dass** er elastische Mittel aufweist, die aus einer Spiralfeder (10) bestehen, welche sich innerhalb der Auslasskammer (8) des Hahnkörpers (3) befindet und ein erstes Ende (10a) in Kontakt mit dem Boden (8a) der Auslasskammer (8) und ein zweites Ende in Kontakt mit dem Federschieber (11) aufweist.

10. Der Hahn (1) gemäß Patentanspruch 1), **dadurch gekennzeichnet, dass** die Sperrmittel (5) eine Vielzahl von Kugeln (12) umfassen, die in entsprechenden Durchgangslöchern (4b) angeordnet sind, welche sich radial in dem vorkragenden Ende (4a) des röhrenförmigen Körpers (4) befinden und zwischen entsprechenden Sitzen (6a) in dem Verschlussring (16) und der Oberfläche einer koaxial auf den Federschieber (11) ausgerichteten Rohrführung (13) angeordnet sind.

11. Der Hahn (1) gemäß Patentanspruch 10), **dadurch gekennzeichnet, dass** eine in das Innere des röhrenförmigen Körpers (4) ragende Dichtung (14) zwischen dem Federschieber (11) und der Rohrführung (13) angeordnet ist.

12. Der Hahn (1) gemäß Patentanspruch 2), **dadurch gekennzeichnet, dass** die erste Umfangskammer (20) durch eine ringförmige Aussparung (22) in der Ringmutter (15) definiert und zwischen einem ersten, ringförmigen Vorsprung (15a) und einem zweiten, ringförmigen Vorsprung (15b) der Ringmutter (15) angeordnet ist, welche beide Dichtungsmittel (23, 24) aufnehmen, welche mit dem Hahnkörper (3) zusammenwirken.

13. Der Hahn (1) gemäß Patentanspruch 7), **dadurch gekennzeichnet, dass** der geformte Ring (30) durch Zwischenfügung von Dichtungsmitteln (34, 35) mit dem Hahnkörper (3) sowie mit den röhrenförmigen Körper (4) zusammenarbeitet.

14. Ein Verbindungsrohr (2), auf eine wechselseitige Einwirkung mit dem Hahn (1) gemäß Patentanspruch 1) ausgelegt, **dadurch gekennzeichnet, dass** es einen zylindrischen Körper (2a) umfasst, der mit einem Ende (2b) und einer ringförmigen Aussparung (2c) versehen ist, die geeignet ist, die Sperrmittel (5) aufzunehmen.

15. Das Verbindungsrohr (2) gemäß Patentanspruch 14), **dadurch gekennzeichnet, dass** es eine ringförmige Auskragung (2d) enthält, die zwischen dem Ende (2b) und der ringförmigen Aussparung (2c) angeordnet ist.

16. Das Verbindungsrohr (2) gemäß Patentanspruch 15), **dadurch gekennzeichnet, dass** die ringförmige Auskragung (2d) eine geneigte, ringförmige Oberfläche (2e) aufweist.

## Revendications

1. Un robinet à raccord rapide (1) indiqué pour coopérer avec un tuyau de raccordement (2) afin de relier un réseau de distribution d'air comprimé (D) à un usager (U), comprenant:
- un corps de robinet (3) où se trouvent une chambre d'entrée (7) communiquant avec ledit réseau de distribution (D) et une chambre de sortie (8) à laquelle un corps tubulaire (4) est relié, saillant de ladite chambre de sortie (8) et recevant d'une manière coulissante ledit tuyau de raccordement (2) communiquant avec ledit usager (U);
- des moyens élastiques (10) positionnés d'une manière coaxiale à l'intérieur dudit tuyau tubulaire (4) et compris entre le fond (8a) de ladite chambre de sortie (8) et un pousse-ressort (11) relié d'une manière coaxiale à l'intérieur dudit corps tubulaire (4);
- des moyens d'arrêt (5) indiqués pour bloquer ledit tuyau de raccordement (2) avec ledit corps tubulaire (4);
- un manchon coulissant (6) relié extérieurement audit corps de robinet (3) et sur l'extrémité (4a) dudit corps tubulaire (4) saillant de ladite chambre de sortie (8);
- de premiers moyens de fin de course (3a) situés dans ledit corps de robinet (3);
- de deuxième moyens de fin de course (4b) situés sur ladite extrémité (4a) dudit corps tubulaire (4),
**caractérisé en ce que** ledit manchon coulissant (6) comprend un écrou à oeil tubulaire (15) relié audit corps de robinet (3) et une bague de retenue (16) alignée d'une manière coaxiale avec ledit écrou à oeil (15) et reliée à ladite extrémité saillante (4a) dudit corps tubulaire (4), ledit écrou à oeil tubulaire (15) et ladite bague de retenue (16) étant reliés d'une manière coaxiale l'un dans l'autre pour au moins une partie commune (17) où il y a au moins une voie de refoulement (18) dudit robinet (1).

2. Le robinet (1) selon la revendication 1) **caractérisé en ce qu'**entre ledit écrou à oeil tubulaire (15) et ledit corps de robinet (3) il y a:
- une première chambre périphérique (20) mettant en communication une première ouverture (7a) de ladite chambre d'entrée (7) avec une deuxième ouverture (8b) de ladite chambre (8) quand ledit écrou à oeil (15) est séparé desdits premiers moyens de fin de course (3a) et ladite bague de retenue (16) est appuyée sur lesdits deuxième moyens de fin de course (4b);
- une deuxième chambre périphérique (21) communiquant avec ladite chambre de sortie (8) au moyen de ladite deuxième ouverture (8b) et avec le milieu extérieur au moyen de ladite au moins une voie de refoulement (18) présente sur ledit manchon (6), quand ledit écrou à oeil (15) est appuyé sur lesdits premiers moyens de fin de course (3a) et ladite bague de retenue (16) est appuyée sur lesdits deuxième moyens de fin de course (4b).

3. Le robinet (1) selon la revendication 1) **caractérisé en ce qu'au** moins une voie de refoulement (18) est un conduit défini par la tolérance d'accouplement entre les dimensions des surfaces opposées (17a, 17b) de ladite partie commune (17).

4. Le robinet (1) selon la revendication 2) **caractérisé en ce que** ladite deuxième chambre périphérique (21) est délimitée par ledit écrou à oeil tubulaire (15), ledit corps de robinet (3) et ledit premier bord annulaire (30a) d'une bague façonnée (30) positionnée d'une manière radiale entre ledit écrou à oeil (15) et ledit corps de robinet (3).

5. Le robinet (1) selon la revendication 4) **caractérisé en ce que** ladite bague façonnée (30) comprend un deuxième bord annulaire (30b) qui est positionné sur le côté opposé dudit premier bord (30a) et qui est compris d'une manière axiale entre l'extrémité (3b) dudit corps de robinet (3) et ladite bague de retenue (16).

6. Le robinet (1) selon la revendication 4) **caractérisé en ce qu'**entre la surface extérieure (30c) de ladite bague façonnée (30) et ladite surface intérieure (15c) dudit écrou à oeil (15) il y a une première chambre annulaire (31) recevant des moyens élastiques (32) positionnés entre ledit premier bord annulaire (30a) de ladite bague façonnée (30) et ladite bague de retenue (16).

7. Le robinet (1) selon la revendication 5) **caractérisé en ce qu'**entre ladite extrémité (3b) dudit corps de robinet (3), ladite bague de retenue (16) et ledit corps tubulaire (4) il y a une deuxième chambre annulaire (40) où un deuxième bord annulaire (30b) de ladite bague façonnée (30) est présent.

8. Le robinet (1) selon la revendication 7) **caractérisé en ce que** ledit corps tubulaire (4) a un trou passant (4c) mettant ladite deuxième chambre annulaire (40) en communication avec ladite chambre de sortie (8).

9. Le robinet (1) selon la revendication 1) **caractérisé en ce qu'**il comprend des moyens élastiques munis d'un ressort hélicoïdal (10) se trouvant à l'intérieur de ladite chambre de sortie (8) dudit corps de robinet (3) et ayant une première extrémité (10a) se trouvant en contact avec le fond (8a) de ladite chambre de sortie (8) et une deuxième extrémité se trouvant en contact avec ledit pousse-ressort (11).

10. Le robinet (1) selon la revendication 1) **caractérisé en ce que** lesdits moyens d'arrêt (5) comprennent une pluralité de billes (12) qui sont logées dans des trous passants correspondants (4b) réalisés d'une manière radiale sur ladite extrémité saillante (4a) dudit corps tubulaire (4) et comprises entre des logements correspondants (6a) réalisés dans ladite bague de retenue (16) et la surface d'un guide-tuyau (13) alignée d'une manière coaxiale avec ledit pousse-ressort (11).

11. Le robinet (1) selon la revendication 10) **caractérisé en ce qu'**un joint d'étanchéité (14) saillant vers l'intérieur dudit corps tubulaire (4) se trouve entre ledit pousse-ressort (11) et ledit guide-tuyau (13).

12. Le robinet (1) selon la revendication 2) **caractérisé en ce que** ladite première chambre périphérique (20) est définie par un abaissement annulaire (22) réalisé dans ledit écrou à oeil (15) et situé entre une première saillie annulaire (15a) et une deuxième saillie annulaire (15b) dudit écrou à oeil (15), chacune recevant des moyens d'étanchéité (23, 24) coopérant avec ledit corps de robinet (3).

13. Le robinet (1) selon la revendication 7) **caractérisé en ce que** ladite bague façonnée (30) coopère avec ledit corps de robinet (3) et avec ledit corps tubulaire (4) par l'interposition de moyens d'étanchéité (34, 35).

14. Un tuyau de raccordement (2) indiqué pour coopérer avec le robinet (1) selon la revendication 1) **caractérisé en ce qu'**il comprend un corps cylindrique (2a) muni d'une extrémité (2b) et d'un abaissement annulaire (2c) apte à recevoir lesdits moyens d'arrêt (5).

15. Le tuyau de raccordement (2) selon la revendication 14) **caractérisé en ce qu'**il comprend une saillie annulaire (2d) comprise entre ladite extrémité (2b) et ledit abaissement annulaire (2c).

16. Le tuyau de raccordement (2) selon la revendication 15) **caractérisé en ce que** ladite saillie annulaire (2d) a une surface annulaire inclinée (2e).
